# EUROPÄISCHE PATENTSCHRIFT

(11) **EP 3 477 249 B1**
(45) Veröffentlichungstag und Bekanntmachung des Hinweises auf die Patenterteilung: **01.12.2021**
(21) Anmeldenummer: 18194225.1
(22) Anmeldetag: 13.09.2018
(51) Int. Cl.: G01B 11/14, G01B 11/25, G06K 9/00, B62D 13/06, B60D 1/36, B60R 1/00, G06T 7/73, B60D 1/62

(54) **VERFAHREN ZUR FORMERKENNUNG EINES OBJEKTS IN EINEM AUSSENBEREICH EINES KRAFTFAHRZEUGS SOWIE KRAFTFAHRZEUG**
METHOD FOR SHAPE RECOGNITION OF AN OBJECT IN AN EXTERNAL AREA OF A MOTOR VEHICLE AND MOTOR VEHICLE
PROCÉDÉ DE RECONNAISSANCE DE FORME D'UN OBJET DANS UNE ZONE EXTÉRIEURE D'UN VÉHICULE AUTOMOBILE ET VÉHICULE AUTOMOBILE

(30) Priorität: 25.10.2017 DE 102017219119
(43) Veröffentlichungstag der Anmeldung: 01.05.2019
(73) Patentinhaber: VOLKSWAGEN AKTIENGESELLSCHAFT, 38440 Wolfsburg (DE)
(72) Erfinder: Loeben, Dennis, 10405 Berlin (DE); Erfurth, Christoph, 12099 Berlin (DE); Musial, Marek, 10551 Berlin (DE)

(56) Entgegenhaltungen:
- DE-A1-102012 011 121
- DE-A1-102014 114 078
- DE-A1-102015 201 586

## Beschreibung

Die Erfindung betrifft ein Verfahren zum Vermessen eines Objekts in einem Außenbereich eines Kraftfahrzeugs. Das Vermessen erfolgt optisch mittels einer Kamera, während das Kraftfahrzeug relativ zu dem Objekt bewegt wird. Zu der Erfindung gehören auch eine Steuervorrichtung zum Durchführen des Verfahrens sowie ein Kraftfahrzeug mit der erfindungsgemäßen Steuervorrichtung.

Möchte man ein Kraftfahrzeug relativ zu einem Objekt manövrieren und/oder das Objekt mit dem Kraftfahrzeug verbinden oder an das Kraftfahrzeug ankuppeln, so ist es vorteilhaft, die Abmessungen oder die Geometrie des Objekts zu kennen. Dies ist insbesondere dann der Fall, wenn das Manövrieren des Kraftfahrzeugs automatisiert erfolgen soll, das heißt ohne ein Zutun eines Fahrers durch eine Steuervorrichtung vorgenommen wird.

Ein Beispiel für ein solches Manövrieren ist das Ankuppeln eines Anhängers an ein Kraftfahrzeug. Um die Anhängerkupplung des Kraftfahrzeugs an die Deichsel des Anhängers anzunähern und in einer vorbestimmten Zielposition oder Ankuppelposition zu positionieren, muss die räumliche Lage der Anhängerkupplung bekannt sein.

Aus der EP 3 081 405 A2 ist hierzu bekannt, während der Annäherung des Kraftfahrzeugs an die Anhängerdeichsel die Relativposition mittels eines Markers zu ermitteln, der die Lage der Anhängerdeichsel kenntlich macht. Dieser Marker kann beispielsweise GPS-Koordinaten der Anhängerdeichsel signalisieren. Des Weiteren ist angedacht, die Anhängerdeichsel mittels einer Kamera oder eines anderen Sensors, beispielsweise eines Radars, zu orten. Ein genauer Algorithmus für die optische Ortung ist nicht beschrieben. Das Verwenden eines Markers ist dahingehend nachteilig, dass für einen Anhänger ein solcher Marker bereitgestellt werden muss, was diese Lösung kostspielig macht.

Aus der WO 2016/155919 A1 ist bekannt, eine Kamera zu verwenden, um eine Anhängerdeichsel zu lokalisieren. In Kamerabildern der Kamera wird hierbei die Form der Anhängerdeichsel wiedererkannt. Hierbei ist es erforderlich, dass die Geometrie der Anhängerdeichsel in dem Kraftfahrzeug in einer Datenbibliothek gespeichert ist, damit sie dann in Kamerabildern wiedererkannt werden kann. Dies macht es aber erforderlich, zu jedem Anhänger, der an das Kraftfahrzeug angekuppelt werden können soll, in der Datenbibliothek die passenden Geometriedaten bereitzustellen.

Aus der GB 2513393 A ist bekannt, mittels einer Bildverarbeitung auf der Grundlage von Kamerabildern eine Relativlage eines Anhängers bezüglich eines Kraftfahrzeugs zu ermitteln. Auch hier muss die Geometrie des Anhängers zuvor mittels einer Datei mit Geometriedaten dem Kraftfahrzeug bekannt gemacht werden.

Aus der WO 2012/080044 A1 ist ein Verfahren bekannt, um eine Relativbewegung zwischen einem Kraftfahrzeug und einem Objekt in einem Außenbereich des Kraftfahrzeugs auf der Grundlage eines optischen Flusses zu ermitteln, der aus einer Bildsequenz einer Kamera gebildet wird. Eine Formerkennung des Objekts ist hierbei nicht vorgesehen.

Aus der DE 10 2015 201 586 A1 ist ein Verfahren zur Wiedererkennung eines Anhängers bekannt, der mittels einer Kamera von einem Kraftfahrzeug aus abgelichtet wird, wobei in dem Bild der Kamera Scanlinien definiert werden, entlang welchen ein Profil (beispielsweise eines Farbverlaufs) ermittelt wird, und wobei für den Fall, dass eine Scanlinie mit einem vorbestimmten Muster, das einen bekannten Anhängertyp beschreibt, übereinstimmt, der zum Muster gehörige Anhängertyp erkannt wird.

Aus der DE 10 2014 114 078 A9 ist ein System zum Abschleppen eines Anhängers bekannt, das einem Fahrer Unterstützung beim Ankoppeln des Anhängers bietet, indem in einem Kamerabild ein graphisches Overlay eingeblendet wird, das den Fahrerschlauch des Fahrzeugs veranschaulicht.

Die DE 10 2012 011 121 A1 beschreibt, wie der Parallaxe-Effekt genutzt werden kann, um Objekte hinsichtlich ihrer Höhenlage bezüglich eines Bildaufnahmepunktes zu unterscheiden.

Der Erfindung liegt die Aufgabe zugrunde, von einem Kraftfahrzeug aus eine Form eines Objekts zu erkennen, dass sich in einem Außenbereich eines Kraftfahrzeugs befindet.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren gegeben.

Durch die Erfindung ist ein Verfahren zur Formerkennung eines Objekts in einem Außenbereich eines Kraftfahrzeugs bereitgestellt. Das Verfahren wird durchgeführt, während sich das Kraftfahrzeug relativ zu dem Objekt bewegt. Durch eine Steuervorrichtung des Kraftfahrzeugs wird hierbei mittels einer Kamera zu zumindest zwei unterschiedlichen Messzeitpunkten jeweils ein Bild erzeugt. Das Bild zeigt das Objekt vor einem Hintergrund des Außenbereichs. In einem ersten der Bilder wird zumindest eine Abtastlinie oder Scanlinie festgelegt. Eine Scanlinie ist eine gedachte Linie in dem Bild, entlang welcher Pixelwerte einzelner Pixel des Bildes betrachtet oder analysiert werden. Zu jeder Scanlinie wird in jedem anderen der Bilder eine korrespondierende Scanlinie festgelegt. Jede korrespondierende Scanlinie weist den gleichen Verlauf in dem jeweiligen Bild auf wie die zugehörige Scanlinie des ersten Bildes, mit welcher sie korrespondiert. Eine korrespondierende Scanlinie weist also die gleiche Form wie die zugehörige Scanlinie auf.

Zu jeder Scanlinie des ersten Bilds wird zu einer vorbestimmten Bildeigenschaft, beispielsweise der Pixelhelligkeit oder Farbewerte der Pixel, ein sich entlang der Scanlinie ergebendes Profil ermittelt. Entlang der jeweils korrespondierenden Scanlinie jedes anderen Bilds wird entsprechend ein sich ergebendes korrespondierendes Profil ermittelt. Jedes Profil beschreibt also den jeweiligen Verlauf der Bildeigenschaft, also beispielsweise der Pixelhelligkeit oder der Farbewerte der Pixel, entlang der jeweiligen Scanlinie. Für jede Scanlinie des ersten Bilds wird anhand des Profils der Scanlinie zumindest ein charakteristischer Bereich der Scanlinie ermittelt. Ein solcher charakteristischer Bereich ist ein Profilabschnitt mit einer vorbestimmten charakteristischen Form. Ein Beispiel für so einen charakteristischen Bereich kann ein Maximum oder eine Doppelspitze im Verlauf des Profils sein. Ein solcher charakteristischer Bereich kann in einer korrespondierenden Scanlinie wiedererkannt werden. Entsprechend wird durch Vergleichen des Profils jeder Scanlinie des ersten Bilds mit dem jeweils korrespondierenden Profil jedes anderen Bilds der zumindest eine charakteristische Bereich in dem jeweils korrespondierenden Profil wiedererkannt. Mit anderen Worten wird also für jede Scanlinie des ersten Bilds zumindest ein charakteristischer Bereich des Profils dieser Scanlinie ermittelt und durch Vergleichen des Profils mit dem jeweiligen korrespondierenden Profil jedes anderen Bilds der zumindest eine charakteristische Bereich in dem jeweils korrespondierenden Profil wiedererkannt. Man kann nun erkennen, wo in dem Profil und dem korrespondierenden Profil sich der charakteristische Bereich jeweils befindet. Man kann erkennen, wie weit sie gegeneinander verschoben sind. Für jeden charakteristischen Bereich des Profils jeder Scanlinie wird dann eine sich zwischen den Messzeitpunkten ergebende Verschiebeweite des charakteristischen Bereichs entlang der jeweiligen Scanlinie ermittelt. Man überprüft oder erkennt also, wie weit der charakteristische Bereich sich aufgrund der relativen Bewegung des Kraftfahrzeugs zum Objekt in dem Bild entlang der jeweiligen Scanlinie verschoben hat. Diese Verschiebung ist abhängig von dem Abstand des jeweiligen Bildinhalts (Objekt oder Hintergrund) zu der Kamera. Dieser Effekt wird auch als Parallaxe bezeichnet. Entsprechend wird entlang jeder Scanlinie in Abhängigkeit von der ermittelten Verschiebeweite jedes charakteristischen Bereichs des Profils der Scanlinie zwischen Objekt und Hintergrund unterschieden. Eine solche Unterscheidung wird auch als Segmentierung bezeichnet. Die Segmentierung wird hier rein optisch auf der Grundlage von zumindest zwei Bildern der Kamera durchgeführt.

Die Scanlinien und die korrespondierenden Scanlinien weisen einen Verlauf auf, welcher einem Abbild eines Strahls entspricht, der sich virtuell in dem Außenbereich dreidimensional in einer vorbestimmten Höhe gerade von dem Kraftfahrzeug weg erstreckt. Hierdurch ergibt sich der Vorteil, dass eine Komponente des Objekts, die in dem ersten Bild auf einer ersten bestimmten Scanlinie liegt, bei einer Bewegung des Kraftfahrzeugs auf einer korrespondierenden Scanlinie eines anderen Bildes zu liegen kommt. Die vorbestimmte Höhe ist eine erwartete oder bekannte Höhe des Objekts. Hierdurch ist die Wahrscheinlichkeit verringert, dass die Komponente zwischen zwei Bildern auf unterschiedlichen Scanlinien zu liegen kommt.

Durch die Erfindung ergibt sich der Vorteil, dass auf der Grundlage von Kamerabildern einer Kamera ohne Vorkenntnis über das Objekt dessen Form erkannt werden kann. Somit lässt sich das Verfahren mit geringem zusätzlichen Bauteilaufwand und Verschaltungsaufwand in einem Kraftfahrzeug realisieren.

Die Erfindung umfasst auch Ausführungsformen, durch die sich zusätzliche Vorteile ergeben.

Eine Ausführungsform sieht vor, dass zum Unterscheiden zwischen Objekt und Hintergrund jedem charakteristischen Bereich des Profils jeder Scanlinie in Abhängigkeit von seiner Verschiebeweite ein Höhenwert zugeordnet wird und hierdurch entlang jeder Scanlinie ein Höhenprofil erzeugt wird. Anhand des jeweiligen Höhenprofils wird dann entlang jeder Scanlinie zwischen Objekt und Hintergrund unterschieden. Hierdurch ergibt sich der Vorteil, dass auch ein Oberflächenprofil des Objekts ermittelt wird (Höhenprofil im Bereich des Objekts).

Eine Ausführungsform sieht vor, dass die vorbestimmte Bildeigenschaft, auf deren Grundlage des jeweiligen Profil entlang jeder Scanlinie gebildet wird, einen Farbwert und/oder einen Kontrastwert und/oder einen Kantendetektionswert eines Bildinhalts des Bildes umfasst. Ein Kantendetektionswert kann beispielsweise auf der Grundlage einer örtlichen Ableitung gebildet werden, wie er beispielsweise als Differenz der Helligkeitswerte benachbarter Pixel des Bildes gebildet werden kann. Es werden hierbei natürlich zum Ermitteln des Profils diejenigen Pixel verwendet, die entlang der Scanlinie angeordnet sind. Die besagten Bildeigenschaften weisen den Vorteil auf, dass mit ihnen optisch zwischen Objekt und Hintergrund unterschieden werden kann.

Eine Ausführungsform sieht vor, dass die charakteristischen Bereiche mittels einer vorbestimmten Merkmalsdetektion festgelegt werden, welche zumindest ein vorbestimmtes, charakteristisches Muster in dem jeweiligen Profil als charakteristischen Bereich identifiziert. Ein solches charakteristisches Muster kann beispielsweise ein lokales Maximum oder ein lokales Minimum sein. Es kann auch vorgesehen sein, ein solches lokales Maximum oder lokales Minimum mit einer vorbestimmten Mindestausprägung, also beispielsweise einer vorbestimmten Mindesthöhe oder Mindesttiefe zu fordern, damit ein charakteristischer Bereich identifiziert wird. Die Ausführungsform weist den Vorteil auf, dass in einem Profil automatisiert zumindest ein charakteristischer Bereich identifiziert werden kann.

Eine Ausführungsform sieht vor, dass eine Geradeausfahrt des Kraftfahrzeugs erkannt wird und die Bilder während der Geradeausfahrt erzeugt werden. Hierdurch wird also das Erfassen der Bilder zu einem Zeitpunkt ausgelöst, der günstig ist, um sicherzustellen, dass sich in dem Profil charakteristische Bereiche ergeben, die auch in jedem korrespondierenden Profil enthalten sind.

Falls das Kraftfahrzeug keine Geradeausfahrt durchführt, sieht eine Ausführungsform vor, dass die Form der Scanlinien in Abhängigkeit von einem Lenkwinkel des Kraftfahrzeugs eingestellt wird. Hierdurch kann auch bei einer Kurvenfahrt des Kraftfahrzeugs ermöglicht werden, dass eine Komponente des Objekts, die auf einer bestimmten Scanlinie des ersten Objekts zu liegen kommt, sich bei der Weiterfahrt auf der Scanlinie entlang bewegt und somit auch auf einer korrespondierenden Scanlinie eines anderen Bilds zu liegen kommt. Entsprechend findet sich dann auch in dem Profil der Scanlinie ein charakteristischer Bereich, der im korrespondierenden Profil der korrespondierenden Scanlinie enthalten ist und somit wiedererkannt werden kann.

Eine Ausführungsform sieht vor, dass die Höhenwerte der charakteristischen Bereiche auf eine vorbestimmte Anzahl von möglichen Höhenwerten gerastert werden. Hierdurch kann ein Rauschen vermindert werden. Insbesondere kann vorgesehen sein, dass zwei mögliche Höhenwerte vorgesehen werden, von denen einer eine erwartete Höhe des Objekts und ein zweiter eine erwartete Höhe des Hintergrunds darstellt und somit die näheren Höhenprofile (zweiwertige Höhenprofile) erzeugt werden. Durch Rastern auf erwartete Höhenwerte des Objekts und des Hintergrunds wird in vorteilhafter Weise eine Mehrdeutigkeit aufgrund von Unebenheiten oder aufgrund von Zwischenwerten, wie sie sich beispielsweise durch weitere Objekte ergeben, die eine geringere Höhe als das Objekt aufweisen, aufgehoben. Wird beispielsweise als Objekt eine Anhängerkupplung erfasst, die auf einem gradbewachsenen Boden steht, so werden sämtliche Grashalme dem Boden zugeordnet und im Höhenprofil ein flacher Boden dargestellt.

Eine Ausführungsform sieht vor, dass als der Hintergrund ein Fahruntergrund des Kraftfahrzeugs erfasst wird. Mit anderen Worten wird die Kamera derart ausgerichtet, dass ihr Erfassungsbereich von oben auf das Objekt gerichtet ist. Als Hintergrund ergibt sich dann der Fahruntergrund des Kraftfahrzeugs. Hierdurch ergibt sich der Vorteil, dass der beschriebene Effekt der Parallaxe eine wirkungsvolle Unterscheidung zwischen Objekt und Hintergrund ermöglicht.

Eine Ausführungsform sieht vor, dass in den Höhenprofilen all diejenigen Abschnitte, deren Höhenwert in einem vorbestimmten Werteintervall liegt, dem Objekt zugeordnet werden. Hierdurch ergibt sich eine Segmentierung, die zusätzlich eine Oberflächenbeschreibung oder Beschreibung der Form des Objekts ergibt.

Durch die Segmentierung kann das Objekt vermessen werden oder zumindest eine Form oder Breite des Objekts erfasst oder beschrieben werden.

Eine Ausführungsform sieht vor, dass die Höhenprofile der Scanlinie zu einer zweidimensionalen Höhenkarte zusammengefasst werden. Mit anderen Worten wir die Linienstruktur beseitigt, indem zwischen den Scanlinien Höhenwerte interpoliert werden. Hierdurch ergibt sich eine flächige Höhenkarte. Diese Ausführungsform weist den Vorteil auf, dass für jeden Punkt der zweidimensionalen Fläche ein Höhenwert definiert ist.

Eine Ausführungsform sieht vor, dass die besagten Bilder während einer Annäherung des Kraftfahrzeugs an eine Anhängerdeichsel eines Anhängers ermittelt werden. Das Objekt ist also die Anhängerdeichsel. Anhand der beschriebenen Unterscheidung zwischen Objekt und Hintergrund wird eine Abmessung und/oder Form der Anhängerdeichsel ermittelt. Die Annäherung des Kraftfahrzeugs bedeutet, dass das Objekt, also die Anhängerdeichsel, noch nicht an das Kraftfahrzeug angekuppelt ist. Das Kraftfahrzeug fährt auf das Objekt, also insbesondere die Anhängerdeichsel, zu. Wird dann die Anhängerdeichsel erreicht, so ist deren Abmessung und/oder Form ermittelt. Damit kann ein Ankuppelvorgang oder das Positionieren einer Anhängerkupplung relativ zur Anhängerdeichsel auf der Grundlage der ermittelten Abmessung und/oder Form durchgeführt werden. Es ist also nicht nötig, zuvor beispielsweise auf der Grundlage einer Datendatei mit Geometriedaten die Form und/oder Abmessung der Anhängerdeichsel bekannt zu machen. Sie wird automatisch bei Annäherung des Kraftfahrzeugs an die Anhängerdeichsel ermittelt.

Um das erfindungsgemäßen Verfahren in einem Kraftfahrzeug durchzuführen, ist durch die Erfindung auch eine Steuervorrichtung für ein Kraftfahrzeug bereitgestellt. Die Steuervorrichtung kann als ein Steuergerät des Kraftfahrzeugs ausgestaltet sein. Die Steuervorrichtung weist eine Recheneinrichtung auf, die dazu eingerichtet ist, eine Ausführungsform des erfindungsgemäßen Verfahrens durchzuführen. Hierzu kann die Recheneinrichtung einen Programmcode umfassen, der bei Ausführen durch die Recheneinrichtung die Ausführungsform des Verfahrens durchführt. Der Programmcode kann in einem Datenspeicher der Recheneinrichtung gespeichert sein.

Die Erfindung umfasst auch ein Kraftfahrzeug mit zumindest einer Kamera für einen Außenbereich des Kraftfahrzeugs und mit einer Ausführungsform der erfindungsgemäßen Steuervorrichtung. Die Steuervorrichtung ist mit der zumindest einen Kamera gekoppelt. Somit kann die Steuervorrichtung auf der Grundlage von Bildern der zumindest einen Kamera das erfindungsgemäße Verfahren durchführen. Das erfindungsgemäße Kraftfahrzeug ist bevorzugt als Kraftwagen, insbesondere Personenkraftwagen oder Lastkraftwagen, ausgestaltet.

Zu der Erfindung gehören auch die Kombinationen der beschriebenen Ausführungsformen.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: ein Flussschaudiagramm einer Ausführungsform des erfindungsgemäßen Verfahrens;
- Fig. 3: eine schematische Darstellung eines Bilds einer Kamera mit einem darin abgebildeten Objekt; und
- Fig. 4: ein Diagramm mit einem Profil und einem korrespondierenden Profil, die zu unterschiedlichen Messzeitpunkten erfasst wurden.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

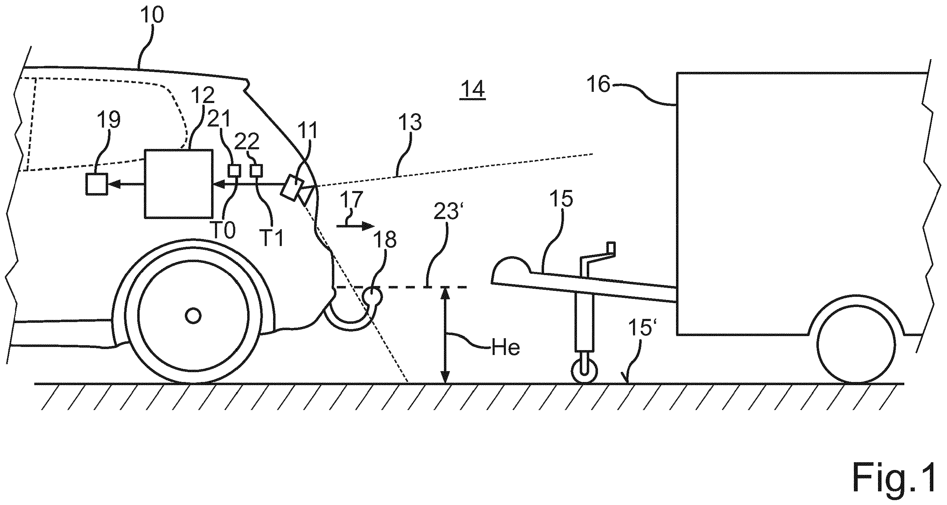

Fig. 1 zeigt ein Kraftfahrzeug 10, bei dem es sich um einen Kraftwagen, insbesondere einen Personenkraftwagen oder Lastkraftwagen, handeln kann. Das Kraftfahrzeug 10 kann eine Kamera 11 aufweisen, bei der es sich beispielsweise um eine Videokamera oder Einzelbildkamera handeln kann. Die Kamera 11 kann eine Heckkamera des Kraftfahrzeugs 10 sein. Des Weiteren ist eine Steuervorrichtung 12 des Kraftfahrzeugs 10 dargestellt. Die Steuervorrichtung 12 kann beispielsweise durch ein Steuergerät des Kraftfahrzeugs 10 gebildet sein. Ein Erfassungsbereich 13 der Kamera 11 kann in einen Außenbereich 14 des Kraftfahrzeugs 10 ausgerichtet sein, beispielsweise in einen rückwärtigen Bereich hinter dem Kraftfahrzeug 10, das heißt an dem Heck des Kraftfahrzeugs 10. Mittels der Kamera 11 kann somit ein Objekt 15 im Außenbereich 14 erfasst werden. In dem dargestellten Beispiel kann es sich bei dem Objekt 15 um eine Anhängerdeichsel eines Anhängers 16 handeln. Für die weitere Erläuterung des Ausführungsbeispiels sei angenommen, dass mit dem Kraftfahrzeug 10 der Anhänger 16 transportiert werden soll. Hierzu wird das Kraftfahrzeug 10 relativ zu dem Objekt 15 heranbewegt, das heißt es ergibt sich eine Annäherung 17 des Kraftfahrzeugs 10 an das Objekt 15. Beispielsweise soll das Kraftfahrzeug 10 in eine solche Relativposition zum Objekt 15 gebracht werden, dass das Objekt 15 mit einer Anhängerkupplung 18 des Kraftfahrzeugs 10 verbunden werden kann, ohne das hierbei das Objekt 15 verschoben oder gerollt werden muss.

Hierzu kann eine Form oder Abmessung 19 des Objekts 15 durch die Steuervorrichtung 12 ermittelt und signalisiert werden.

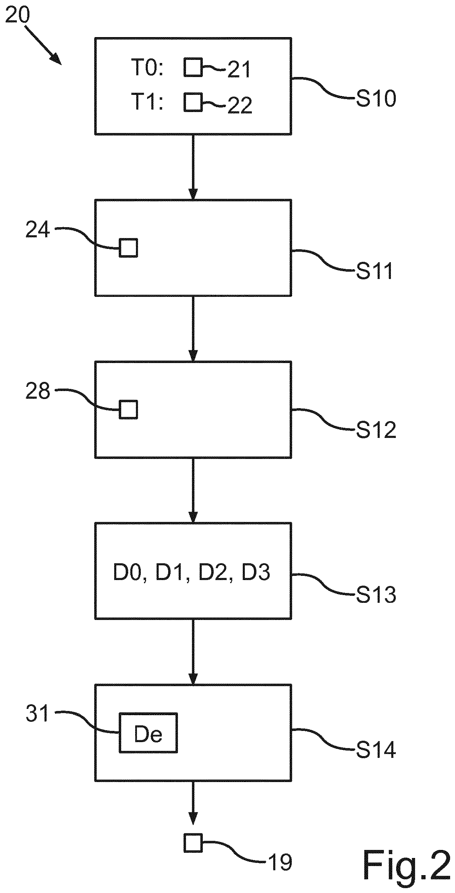

Fig. 2 veranschaulicht hierzu ein Verfahren 20, das durch die Steuervorrichtung 12 zum Ermitteln der Form und/oder Abmessung 19 des Objekts 15 durchgeführt werden kann.

In einem Schritt S10 kann während der Annäherung 17 durch die Steuervorrichtung 12 mittels der Kamera 11 zu zwei unterschiedlichen Messzeitpunkten T0, T1 jeweils ein Kamerabild oder kurz Bild 21, 22, des Objekts 15 vor einem Hintergrund 15' erzeugt oder aufgenommen werden. Der Hintergrund 15' kann bei der dargestellten Ausrichtung des Erfassungsbereichs 13 der Kamera 11 ein Fahruntergrund sein.

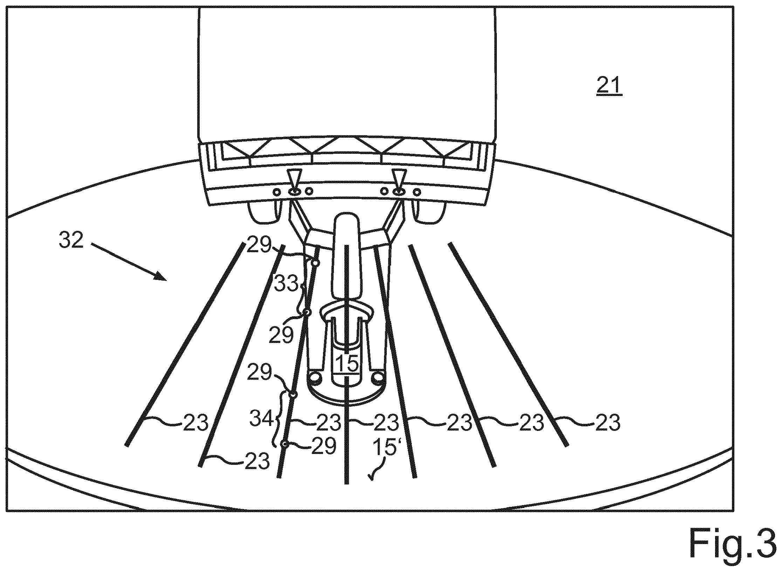

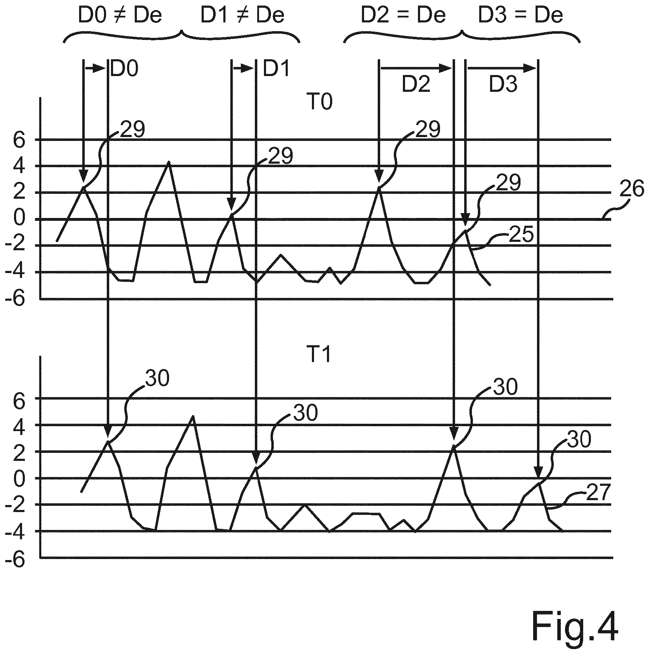

Für die weitere Erläuterung des Verfahrens 20 wird auf Fig. 3 und Fig. 4 verwiesen.

Fig. 3 zeigt ein beispielhaftes Bild 21, wie es mit der Kamera 11 erzeugt worden sein kann.

In einem Schritt S11 kann die Steuervorrichtung 12 in einem ersten der Bilder, hier beispielhaft das Bild 21, zumindest eine Scanlinie 23 definiert oder festgelegt werden. Jede Scanlinie 23 kann dem Abbild eines Strahls 23' entsprechen (siehe Fig. 1), welcher sich in einer Höhe He gerade von dem Kraftfahrzeug weg sich erstreckt. Die Höhe He kann eine bekannte Höhe des Objekts 15 sein. In dem Bild 22 und in jedem anderen Bild können dieselben Scanlinien 23 definiert sein. Sie stellen damit korrespondierende Scanlinien zu den Scanlinien 23 des Bilds 21 dar.

Zu jeder Scanlinie 23 des Bilds 21 wird zu einer vorbestimmten Bildeigenschaft 24 ein sich entlang der Scanlinie ergebendes Profil 25 gebildet, wie es beispielhaft in Fig. 4 veranschaulicht ist.

Fig. 4 veranschaulicht entlang einer Achse 26, welche dem Verlauf einer Scanlinie 23 des Bilds 21 entspricht, das sich ergebende Profil 25 zu einer Bildeigenschaft 24, welche den Wert einer Kantendetektion darstellt. Hierzu kann beispielsweise für jeden Punkt des Profils 25 die Differenz der Helligkeitswerte benachbarter Pixel entlang der Scanlinie 23 berechnet sein. Fig. 4 veranschaulicht des Weiteren, wie für das Bild 22, also für den Messzeitpunkt T1, für die korrespondierende Scanlinie im Bild 22 ein korrespondierendes Profil 27 auf Grundlage der Bildeigenschaft 24 ermittelt werden kann.

In einem Schritt S12 kann nun für das Profil 25 auf der Grundlage einer Merkmalsdetektion 28 zumindest ein charakteristischer Bereich 29 ermittelte werden. Die Merkmalsdetektion 28 kann beispielsweise lokale Maxima als jeweiligen charakteristischen Bereich identifizieren.

Jeder charakteristische Bereich 29 des Profils 25 kann nun in dem Profil 27 als wiedererkannter charakteristischer Bereich 30 wieder erkannt werden. Beispielsweise kann dies auf der Grundlage einer Korrelation erfolgen.

In einem Schritt S13 kann nun für jeden charakteristischen Bereich 29 eine sich zwischen den Messzeitpunkten T0 und T1 ergebende Verschiebeweite D0, D1, D2, D3 des jeweiligen charakteristischen Bereichs 29 entlang der jeweiligen Scanlinie 23 ermittelt werden. Die Verschiebeweite D0, D1, D2, D3 hängt zum einen ab von der Bewegungsweite des Kraftfahrzeugs 10 während der Annäherung 17 zwischen den beiden Messzeitpunkten T0, T1 und zum anderen von dem Abstand des jeweils im charakteristischen Bereich 29 dargestellten Bildinhalts zur Kamera 11. Durch die unterschiedlichen Abstände der Bildinhalte ergibt sich der Effekt der Parallaxe, das heißt je nach Abstand des jeweiligen Bildinhalts zur Kamera 11 ergibt sich eine andere Verschiebeweite D0, D1, D2, D3.

In einem Schritt S14 kann nun entlang jeder Scanlinie 23 in Abhängigkeit von der ermittelten Verschiebeweite D0, D1, D2, D3 jedes charakteristischen Bereichs 29 des Profils 25 der jeweiligen Scanlinie 23 zwischen dem Objekt 15 und dem Hintergrund 15' unterschieden werden.

Hierzu kann ein Segmentierungskriterium 31 zugrunde gelegt werden, welches beispielsweise einen Vergleich der jeweiligen Verschiebeweite D0, D1, D2, D3 mit einer erwarteten Verschiebeweite De vorsieht, die aus der bekannten Höhe He des Objekts 15 resultiert. Der Vergleich kann hierbei ein Toleranzintervall vorsehen, innerhalb welchem eine Identität der jeweiligen Verschiebeweite D0, D1, D2, D3 zur erwarteten Verschiebeweite De erkannt oder signalisiert wird.

Fig. 3 veranschaulicht, wie entlang einer Scanlinie 23 eine Segmentierung 32 in zwei Segmente 33, 34 vorgenommen werden kann. Das Segment 33 kann einen Abschnitt einer Scanlinie 23 beschreiben, der dem Objekt 15 zugeordnet ist. Das Segment 34 kann einen Abschnitt einer Scanlinie 23 beschreiben, der dem Hintergrund 15' zugeordnet ist.

Aus allen Segmenten 33 aller Scanlinien 23 kann nun eine Beschreibung der Abmessung und/oder Form 19 des Objekts 15 ermittelt werden.

Die Abmessung und/oder Form 19 kann in dem Kraftfahrzeug einer weiteren Komponente signalisiert werden, beispielsweise einem Fahrerassistenzsystem, welches das Kraftfahrzeug 10 autonom oder automatisiert an das Objekt 15 heranführt.

Somit ist eine präzise Anfahrt oder Annäherung 17 des Kraftfahrzeugs 10 zu einem Objekt 15 mit bekannter Höhe He möglich, auch wenn keine Kenntnis der Form 19 vorliegt. Eine Kenntnis der Form ist nicht erforderlich. Die Form 19 des Objekts 15 wird detektiert. Hierdurch kann eine präzise Zielposition beispielsweise der Anhängerkupplung 18 erreicht werden und/oder eine Kollision mit dem Objekt 15 bei der Annäherung 17 vermieden werden.

Die Steuervorrichtung 12 führt hierzu eine Analyse der Bewegung in den einzelnen Bildern 21, 22 unter Berücksichtigung der Fahrzeugbewegung bei der Annäherung 17 durch. Einzelne Bildbereiche der Bilder 21, 22 werden den Hintergrund 15' (bspw dem Fahruntergrund oder der Bodenebene) einerseits und dem Objekt 15 bekannter Höhe He andererseits zugeordnet. Die Bildbereiche werden in Form von Scanlinien 23 repräsentiert. Diese entsprechen im dreidimensionalen Raum 23' die in der bekannten Höhe He des Objekts 15 verlaufen und deren Form als Scanlinien 23 in das jeweilige Bild 21, 22 projiziert oder abgebildet ist. Diese Scanlinien 23 werden über zeitlich benachbarte Bilder 21, 22 in Bezug auf ihre Bildeigenschaft 24, beispielsweise mittels einer Kantendetektionsfunktion analysiert. Es wird geprüft, welche Teile oder Segmente 33, 34 jeder Scanlinie 23 der erwarteten Objektbewegung gemäß der erwarteten Verschiebeweite De entsprechen (ergibt Zuordnung zum Objekt 15) und welche der Annahme wiedersprechen (entspricht Zuordnung zum Hintergrund 15'). Dies ermöglicht bei ausreichender Anzahl von Scanlinien 23 (bspw mehr als 5, insbesondere mehr als 10), eine Segmentierung 32, die für eine Bestimmung der Außenform des Objekts 15 benutzt werden kann. Damit ist eine präzise und hindernisfreie Anfahrt oder Annäherung 17 an das Objekt 15 möglich.

Weiterhin kann durch Triangulation des nächstliegenden Punkts des Objekts zum Kraftfahrzeug 10 auf die Höhe dieses nächstliegenden Punktes geschlossen werden. Dies kann als weiteres Sicherheitsmerkmal verwendet werden. Das Kraftfahrzeug 10 kann damit präzise zu der beschriebenen Zielposition angenähert werden. Bei Bedarf kann in Abhängigkeit von der Zielposition ein Offset genutzt werden, um sich relativ dazu zu positionieren.

Der vorgestellte Ansatz bietet eine Erkennung der äußeren Form des Objekts 15 und einer Erkennung einer Objektgeometrie durch Analyse einer Bildeigenschaft, beispielsweise einer Kantenfunktion, wodurch eine Kollision des Kraftfahrzeugs 10 mit dem Objekt 15 verhindert werden kann und eine Anfahrt zu einer Zielposition durchgeführt werden kann.

Das Objekt 15 kann hierbei eine Anhängerdeichsel eines Anhängers 16 sein, an deren Anhängerklaue das Kraftfahrzeug 10 angekuppelt oder angedockt werden soll. Dabei kann die Anhängerkupplung 18 (Anhängerankuppelvorrichtung) unter der Anhängerklaue positioniert werden, was die Zielposition definiert. Allerdings kann die reale Zielposition in diesem Fall einen Offset oder Versatz vorsehen, nämlich den halben Durchmesser der Kupplungskuppel der Anhängerklaue zu dem beschriebenen nächstliegenden Punkt des Objekts 15 zum Kraftfahrzeug 10.

Insgesamt zeigt das Beispiel, wie durch die Erfindung eine optische Segmentierung bereitgestellt werden kann.

### Bezugszeichenliste

- 10: Kraftfahrzeug
- 11: Kamera
- 12: Steuervorrichtung
- 13: Erfassungsbereich
- 14: Außenbereich
- 15: Objekt
- 15': Hintergrund
- 16: Anhänger
- 17: Annäherung
- 18: Anhängerkupplung
- 19: Abmessung und/oder Form
- 20: Verfahren
- 21: Bild
- 22: Bild
- 23: Scanlinie
- 23': Strahl
- 24: Bildeigenschaft
- 25: Profil
- 26: Achse
- 27: korrespondierendes Profil
- 28: Merkmalsdetektion
- 29: Charakteristischer Bereich
- 30: Wiedererkannter charakteristischer Bereich
- 31: Segmentierungskriterium
- 32: Segmentierung
- 33: Segment
- 34: Segment
- He: Bekannte Höhe
- D0, D1: Verschiebeweite
- D2, D3: Verschiebeweite
- De: Erwartete Verschiebeweite
- T0, T1: Messzeitpunkt

## Patentansprüche

1. Verfahren (20) zur Formerkennung eines Objekts (15) in einem Außenbereich (14) eines Kraftfahrzeugs (10), wobei durch eine Steuervorrichtung (12) des Kraftfahrzeugs (10), während sich das Kraftfahrzeug (10) relativ zu dem Objekt (15) bewegt, mittels einer Kamera (11) zu zumindest zwei unterschiedlichen Messzeitpunkten (T0, T1) jeweils ein Bild (21, 22), welches das Objekt (15) vor einem Hintergrund (15') des Außenbereichs (14) zeigt, erzeugt wird und
- in einem ersten der Bilder (21) zumindest eine Scanlinie (23) und zu jeder Scanlinie (23) in jedem anderen der Bilder (22) eine korrespondierende Scanlinie festgelegt wird und
- zu jeder Scanlinie (23) des ersten Bilds (21) zu einer vorbestimmten Bildeigenschaft (24) ein sich entlang der Scanlinie (23) ergebendes Profil (25) und entlang der jeweils korrespondierenden Scanlinie jedes anderen Bilds ein sich ergebendes korrespondierendes Profil (27) ermittelt wird und
- in dem Profil (25) jeder Scanlinie (23) des ersten Bilds (21) zumindest ein charakteristischer Bereich (29) ermittelt wird und
- durch Vergleichen des Profils (25) jeder Scanlinie (23) des ersten Bilds (21) mit dem jeweils korrespondierenden Profil (27) jedes anderen Bilds (22) der zumindest eine charakteristische Bereich (29) in dem jeweils korrespondierenden Profil (27) wiedererkannt wird,
wobei
- für jeden charakteristischen Bereich (29) eine sich zwischen den Messzeitpunkten (T0, T1) ergebende Verschiebeweite (D0, D1, D2, D3) des charakteristischen Bereichs (29) entlang der jeweiligen Scanlinie (23) ermittelt wird, wodurch erkannt wird, wie weit der charakteristische Bereich (29) sich aufgrund der relativen Bewegung des Kraftfahrzeugs (10) zum Objekt (15) in dem anderen Bild (22) entlang der jeweiligen Scanlinie (23) verschoben hat, wobei diese Verschiebung abhängig von dem Abstand des jeweiligen Bildinhalts, der jeweils entweder Objekt oder Hintergrund ist, zu der Kamera ist, und entsprechend
- entlang jeder Scanlinie (23) in Abhängigkeit von der ermittelten Verschiebeweite (D0, D1, D2, D3) jedes charakteristischen Bereichs (29) des Profils (25) der Scanlinie (23) zwischen Objekt (15) und Hintergrund (15') unterschieden wird, wobei
- die Scanlinien (23) und die korrespondierenden Scanlinien einen Verlauf aufweisen, welcher einem Abbild eines Strahls (23') entspricht, der sich virtuell in dem Außenbereich (14) dreidimensional in einer vorbestimmten Höhe (He) gerade von dem Kraftfahrzeug (10) weg erstreckt, wobei
- die vorbestimmte Höhe hierbei eine erwartete oder bekannte Höhe (He) des Objekts (15) ist, wobei aus der erwarteten oder bekannten Höhe (He) des Objekts (15) eine erwartete Verschiebeweite (De) resultiert, wobei
- zwischen Objekt (15) und Hintergrund (15') anhand eines Vergleichs der ermittelten Verschiebeweite (D0, D1, D2, D3) mit der erwarteten Verschiebeweite (De) unterschieden wird.

2. Verfahren (20) nach Anspruch 1, wobei die vorbestimmte Bildeigenschaft einen Farbwert und/oder einen Kontrastwert und/oder einen Kantendetektionswert eines Bildinhalts des Bildes umfasst.

3. Verfahren (20) nach einem der vorhergehenden Ansprüche, wobei die charakteristischen Bereiche (29) mittels einer vorbestimmten Merkmalsdetektion festgelegt werden, welche zumindest ein vorbestimmtes charakteristisches Muster in dem jeweiligen Profil (25) als charakteristischen Bereich identifiziert.

4. Verfahren (20) nach einem der vorhergehenden Ansprüche, wobei eine Geradeausfahrt des Kraftfahrzeugs (10) erkannt wird und die Bilder (21, 22) während der Geradeausfahrt erzeugt werden.

5. Verfahren (20) nach einem der vorhergehenden Ansprüche, wobei eine Form der Scanlinien (23) in Abhängigkeit von einem Lenkwinkel des Kraftfahrzeugs (10) eingestellt wird.

6. Verfahren (20) nach einem der vorhergehenden Ansprüche, wobei als der Hintergrund (15') ein Fahruntergrund des Kraftfahrzeugs (10) erfasst wird.

7. Verfahren (20) nach einem der vorhergehenden Ansprüche, wobei die Bilder (21, 22) während einer Annäherung des Kraftfahrzeugs (10) an eine Anhängerdeichsel eines Anhängers (16) ermittelt werden und anhand der Unterscheidung zwischen Objekt (15) und Hintergrund (15') eine Abmessung und/oder Form der Anhängerdeichsel ermittelt wird.

8. Verfahren (20) nach einem der vorhergehenden Ansprüche, wobei zum Unterscheiden zwischen Objekt (15) und Hintergrund (15') jedem charakteristischen Bereich (29) des Profils (25) jeder Scanlinie (23) in Abhängigkeit von seiner Verschiebeweite ein Höhenwert zugeordnet wird und hierdurch entlang jeder Scanlinie (23) ein Höhenprofil erzeugt wird und anhand des jeweiligen Höhenprofils entlang jeder Scanlinie (23) zwischen Objekt (15) und Hintergrund (15') unterschieden wird.

9. Verfahren (20) nach Anspruch 8, wobei in den Höhenprofilen all denjenigen Abschnitte, deren Höhenwert in einem vorbestimmten Werteintervall liegt, dem Objekt (15) zugeordnet werden.

10. Verfahren (20) nach Anspruch 8 oder 9, wobei die Höhenwerte der charakteristischen Bereiche (29) auf eine vorbestimmte Anzahl von möglichen Höhenwerten gerastert werden.

11. Verfahren (20) nach einem der Ansprüche 8 bis 10, wobei zwei mögliche Höhenwerte vorgesehen werden, von denen einer eine erwartete Höhe (He) des Objekts (15) und ein zweiter eine erwartete Höhe des Hintergrunds (15') darstellt, und somit binäre Höhenprofile erzeugt werden.

12. Verfahren (20) nach einem der Ansprüche 8 bis 11, wobei die Höhenprofile der Scanlinien (23) zu einer zweidimensionalen Höhenkarte zusammengefasst werden.

13. Steuervorrichtung (12) für ein Kraftfahrzeug (10), wobei die Steuervorrichtung (12) eine Recheneinrichtung aufweist, die dazu eingerichtet ist, ein Verfahren nach einem der vorhergehenden Ansprüche durchzuführen.

14. Kraftfahrzeug (10) mit zumindest einer Kamera (11) zum Erfassen eines Außenbereichs (14) des Kraftfahrzeugs (10) und mit einer Steuervorrichtung (12) nach Anspruch 13, wobei die Steuervorrichtung (12) mit der zumindest einen Kamera (11) gekoppelt ist.

## Claims

1. Method (20) for the shape recognition of an object (15) in an external area (14) of a motor vehicle (10), wherein by means of a control device (12) of the motor vehicle (10), while the motor vehicle (10) is moving relative to the object (15), an image (21, 22), which shows the object (15) in front of a background (15') of the external area (14), is generated by means of a camera (11) at at least two different measuring instants (T0, T1), and
- at least one scan line (23) is defined in a first one of the images (21) and a scan line corresponding to each scan line (23) is defined in each of the other images (22), and
- a profile (25) resulting along the scan line (23) is determined for each scan line (23) of the first image (21) for a predetermined image property (24), and a resulting corresponding profile (27) is determined along the respectively corresponding scan line of each other image, and
- at least one characteristic region (29) is determined in the profile (25) of each scan line (23) of the first image (21), and
- by comparing the profile (25) of each scan line (23) of the first image (21) to the respectively corresponding profile (27) of each other image (22), the at least one characteristic region (29) is recognized in the respectively corresponding profile (27), wherein
- for each characteristic region (29), a displacement distance (D0, D1, D2, D3) of the characteristic region (29) along the respective scan line (23) resulting between the measuring instants (T0, T1) is determined, whereby it is recognized how far the characteristic region (29) has shifted in the other image (22) along the respective scan line (23) due to the movement of the motor vehicle (10) relative to the object (15), wherein this movement is dependent on the distance of the respective image content, which is respectively either object or background, to the camera, and accordingly
- a distinction is made between the object (15) and the background (15') along each scan line (23) as a function of the determined displacement distance (D0, D1, D2, D3) of each characteristic region (29) of the profile (25) of the scan line (23), wherein
- the scan lines (23) and the corresponding scan lines have a course that corresponds to an image of a beam (23') that virtually extends three-dimensionally in the external area (14) at a predetermined height (He) straight away from the motor vehicle (10), wherein
- the predetermined height in this case is an expected or known height (He) of the object (15), wherein the expected or known height (He) of the object (15) results in an expected displacement distance (De), wherein
- a distinction is made between the object (15) and the background (15') on the basis of a comparison of the determined displacement distance (D0, D1, D2, D3) and the expected displacement distance (De).

2. Method (20) according to claim 1, wherein the predetermined image characteristic comprises a color value and/or a contrast value and/or an edge detection value of an image content of the image.

3. Method (20) according to any of the preceding claims, wherein the characteristic regions (29) are defined by means of a predetermined feature detection, which identifies at least one predetermined characteristic pattern in the respective profile (25) as the characteristic region.

4. Method (20) according to any of the preceding claims, wherein a straight-ahead travel of the motor vehicle (10) is recognized and the images (21, 22) are generated during the straight-ahead travel.

5. Method (20) according to any of the preceding claims, wherein a shape of the scan lines (23) is set as a function of a steering angle of the motor vehicle (10).

6. Method (20) according to any of the preceding claims, wherein a driving surface of the motor vehicle (10) is detected as the background (15').

7. Method (20) according to any of the preceding claims, wherein the images (21, 22) are determined during an approach of the motor vehicle (10) to a trailer hitch of a trailer (16), and a dimension and/or shape of the trailer hitch is determined on the basis of the distinction between the object (15) and the background (15').

8. Method (20) according to any of the preceding claims, wherein, in order to distinguish between object (15) and background (15'), a height value is assigned to each characteristic region (29) of the profile (25) depending on its displacement distance, and a height profile is thereby generated along each scan line (23) and a distinction is made between object (15) and background (15') on the basis of the respective height profile along each scan line (23).

9. Method (20) according to claim 8, wherein all those sections whose height value is within a predetermined value interval are assigned to the object (15) in the height profiles.

10. Method (20) according to claim 8 or 9, wherein the height values of the characteristic regions (29) are rasterized to a predetermined number of possible height values.

11. Method (20) according to any of claims 8 to 10, wherein two possible height values are provided, one of which represents an expected height (He) of the object (15) and a second of which represents an expected height of the background (15'), and binary height profiles are thus generated.

12. Method (20) according to any of claims 8 to 11, wherein the height profiles of the scan lines (23) are combined to form a two-dimensional height map.

13. Control device (12) for a motor vehicle (10), wherein the control device (12) has a computing unit that is configured to carry out a method according to any of the preceding claims.

14. A motor vehicle (10) having at least one camera (11) for detecting an external area (14) of the motor vehicle (10) and having a control device (12) according to claim 13, wherein the control device (12) is coupled to the at least one camera (11).

## Revendications

1. Procédé (20) de reconnaissance de forme d'un objet (15) dans une zone extérieure (14) d'un véhicule automobile (10), dans lequel, pendant que le véhicule automobile (10) se déplace par rapport à l'objet (15), respectivement une image (21, 22), qui montre l'objet (15) devant un arrière-plan (15') de la zone extérieure (14), est générée à au moins deux moments de mesure (T0, T1) différents par un dispositif de commande (12) du véhicule automobile (10) au moyen d'une caméra (11) et
- au moins une ligne de balayage (23) est définie dans une première des images (21) et, pour chaque ligne de balayage (23), une ligne de balayage correspondante est définie dans chacune des autres images (22) et
- pour chaque ligne de balayage (23) de la première image (21), un profil (25) obtenu le long de la ligne de balayage (23) est déterminé pour une propriété d'image (24) prédéfinie, ainsi qu'un profil (27) correspondant obtenu le long de la ligne de balayage respectivement correspondante de chaque autre image et
- au moins une zone caractéristique (29) est déterminée dans le profil (25) de chaque ligne de balayage (23) de la première image (21) et
- au moyen de la comparaison du profil (25) de chaque ligne de balayage (23) de la première image (21) avec le profil (27) respectivement correspondant de chaque autre image (22), l'au moins une zone caractéristique (29) est reconnue dans le profil (27) respectivement correspondant, dans lequel
- pour chaque zone caractéristique (29), une longueur de décalage (D0, D1, D2, D3) de la zone caractéristique (29) obtenue entre les moments de mesure (T0, T1) le long de la ligne de balayage (23) respective est déterminée, ce qui permet de reconnaître dans quelle mesure la zone caractéristique (29) s'est décalée en raison du déplacement relatif du véhicule automobile (10) par rapport à l'objet (15) dans l'autre image (22) le long de la ligne de balayage (23) respective, ce décalage étant dépendant de la distance entre le contenu d'image respectif, qui est respectivement soit l'objet soit l'arrière-plan, et la caméra et, de manière correspondante
- une distinction est faite entre l'objet (15) et l'arrière-plan (15') le long de chaque ligne de balayage (23) en fonction de la longueur de décalage (D0, D1, D2, D3) déterminée de chaque zone caractéristique (29) du profil (25) de la ligne de balayage (23), dans lequel
- les lignes de balayage (23) et les lignes de balayage correspondantes présentent un tracé qui correspond à une image d'un rayon (23'), qui s'étend virtuellement en s'éloignant de manière rectiligne depuis le véhicule automobile (10) dans la zone extérieure (14) de manière tridimensionnelle à une hauteur (He) prédéfinie, dans lequel
- la hauteur prédéfinie est ici une hauteur (He) attendue ou connue de l'objet (15), une longueur de décalage (De) attendue résultant de la hauteur (He) attendue ou connue de l'objet (15), dans lequel
- une distinction est faite entre l'objet (15) et l'arrière-plan (15') au moyen d'une comparaison des longueurs de décalage (D0, D1, D2, D3) déterminées avec la longueur de décalage (De) attendue.

2. Procédé (20) selon la revendication 1, dans lequel la propriété d'image prédéfinie comprend une valeur de couleur et/ou une valeur de contraste et/ou une valeur de détection de contours d'un contenu d'image de l'image.

3. Procédé (20) selon l'une quelconque des revendications précédentes, dans lequel les zones caractéristiques (29) sont définies au moyen d'une détection d'attribut prédéfinie, qui identifie au moins un dessin caractéristique prédéfini dans le profil (25) respectif comme zone caractéristique.

4. Procédé (20) selon l'une quelconque des revendications précédentes, dans lequel un déplacement en ligne droite du véhicule automobile (10) est reconnu et les images (21, 22) sont générées pendant le déplacement en ligne droite.

5. Procédé (20) selon l'une quelconque des revendications précédentes, dans lequel une forme des lignes de balayage (23) est réglée en fonction d'un angle de braquage du véhicule automobile (10).

6. Procédé (20) selon l'une quelconque des revendications précédentes, dans lequel une surface de roulement du véhicule automobile (10) est détectée comme arrière-plan (15').

7. Procédé (20) selon l'une quelconque des revendications précédentes, dans lequel les images (21, 22) sont déterminées pendant un rapprochement du véhicule automobile (10) vers une barre d'attelage d'une remorque (16) et une dimension et/ou forme de la barre d'attelage est déterminée au moyen de la distinction entre l'objet (15) et l'arrière-plan (15').

8. Procédé (20) selon l'une quelconque des revendications précédentes, dans lequel, pour faire la distinction entre l'objet (15) et l'arrière-plan (15'), une valeur de hauteur est associée à chaque zone caractéristique (29) du profil (25) de chaque ligne de balayage (23) en fonction de sa longueur de décalage et un profil de hauteur est ainsi généré le long de chaque ligne de balayage (23) et une distinction est faite entre l'objet (15) et l'arrière-plan (15') au moyen du profil de hauteur respectif le long de chaque ligne de balayage (23).

9. Procédé (20) selon la revendication 8, dans lequel, dans les profils de hauteur, toutes les sections dont la valeur de hauteur est comprise dans un intervalle de valeurs prédéfini sont associées à l'objet (15).

10. Procédé (20) selon la revendication 8 ou 9, dans lequel les valeurs de hauteur des zones caractéristiques (29) sont rastérisées sur un nombre prédéfini de valeurs de hauteur possibles.

11. Procédé (20) selon l'une quelconque des revendications 8 à 10, dans lequel deux valeurs de hauteur possibles sont prévues, dont une représente une hauteur attendue (He) de l'objet (15) et une seconde une hauteur attendue de l'arrière-plan (15') et des profils de hauteur binaires sont ainsi générés.

12. Procédé (20) selon l'une quelconque des revendications 8 à 11, dans lequel les profils de hauteur des lignes de balayage (23) sont réunis en une carte de hauteur bidimensionnelle.

13. Dispositif de commande (12) pour un véhicule automobile (10), dans lequel le dispositif de commande (12) comporte un moyen de calcul, qui est configuré pour exécuter un procédé selon l'une quelconque des revendications précédentes.

14. Véhicule automobile (10) doté d'au moins une caméra (11) destinée à détecter une zone extérieure (14) du véhicule automobile (10) et doté d'un dispositif de commande (12) selon la revendication 13, dans lequel le dispositif de commande (12) est couplé à l'au moins une caméra (11).
